# EUROPEAN PATENT APPLICATION

(11) **EP 1 158 432 A1**
(43) Date of publication of application: **28.11.2001**
(21) Application number: 00118909.1
(22) Date of filing: 31.08.2000
(51) Int. Cl.: G06F 17/60

(54) **Service fee determination method and system**

(30) Priority: 18.05.2000 JP 2000152670
(71) Applicant: Hitachi, Ltd., Chiyoda-ku, Tokyo 101-8010 (JP)
(72) Inventor: Tsukuda, Gunji, c/o Hitachi, Ltd., Tokyo 100-8220 (JP); Akatsu, Masaharu, c/o Hitachi, Ltd., Tokyo 100-8220 (JP); Kimura, Junichi, c/o Hitachi, Ltd., Tokyo 100-8220 (JP); Matsuzaki, Katsuhiko, c/o Hitachi, Ltd., Tokyo 100-8220 (JP)
(74) Representative: Strehl Schübel-Hopf & Partner

(57) **Abstract**

In a service use fee computation method, a server accepts a request of presentation of a list of service delivery times and service use fees (101), computes a difference between an accepted time and a service delivery time, and computes a service use fee on the basis of said time difference (102). A plurality of fee tables can be prepared to provide a fee system according to a change in a reservation rate to a user.

## Description

### BACKGROUND OF THE INVENTION

The present invention relates to a method for determining a fee of a user who uses an application function in a system, method and program which provide the application function to users via a network, and more particularly, to a method for determining a fee of one of a plurality of services provided via the network.

U.S. Patent No. 5,790,170 and JP-A-11-031186 disclose a two-way information transmission system between an information distribution center and a subscriber terminal and a device for modifying a ticket price.

Most entrepreneurs, who want to provide services via a communication network, are plagued with solving a problem of having too many accesses to the services concentratedly from many users during a certain time period. On a date on which an article or service in great demand is to be released or on which the price or added value is changed to such a direction as preferable to users, in particular, the number of users' accesses or transactions thereto will be largely increased. For the purpose of satisfying such users' demand, an entrepreneur is required to heavily invest in increasing the performance of a sales computer to a high level beyond its usual use level or in avoiding service interruption of a communication line. The business promoter utilizing the communication network may also face another problem. That is, since it is difficult for the entrepreneur to predict users' demand before the article release, he may wrongly set its price, thus leading to the fact that, during suitable price setting, collapsed balance between supply and demand proceeds.

With respect to downloading of housekeeping-software-function delivery service, game-software-function delivery service, film-video-rental and music, for example; probability of their concentrated download becomes high on a particular date such as at the end of a month, new-game release date, or download start date of new-made film, music, etc., and thus any countermeasure toward it must be considered.

### SUMMARY OF THE INVENTION

It is therefore an object of the present invention to provide a method and system for removing difficulties in setting of prices for services via a network.

Another object of the present invention is to provide a network service which can avoid concentration of service use during a particular time period by providing the same service in a plurality of time periods.

A further object of the present invention is to lighten the labor of a system administrator and to inform an administrator of an accurate state of a service, when access to the service via a network is concentrated during a certain time period and thus it is necessary to take some measure of solving it.

In accordance with an aspect of the present invention, the above objects are attained by providing a service management method for accepting a reservation of a service sold via a communication network to realize service sales management. The method comprises the steps of previously holding a plurality of fees for the service, and determining fees for the service on the basis of a time of a request of inquiry about the fee of the service received from a user via the network.

The service is supplied via the network at a time equal to or later than the request time. Further, the method further includes a step of a relative time from the request time to an implementation time of the service, and a step of determining said fee on the basis of the relative time and the plurality of fees.

In the aspect of the present invention, further, the above objects are attained by providing a service management method which further comprises a step of computing a reservation rate to a suppliable service number by accumulating reservations of the service accepted via said network, a step of preparing a plurality of previously determined relative fee tables showing a relationship between the suppliable service number and a predetermined range of reservation rate for the service with a relative time as a base, and a step of, when accepting a reservation of the service via the network, selecting one of the plurality of relative fee tables corresponding to the reservation rate after the reservation accumulation.

Since a service reservation management server can collect the service use reservation states when accepting the request of presentation of the list of the service delivery times and service use fees and can compute a service use fee according to the service use reservation states; the server can present a service delivery time zone and a list of corresponding service use fees based on the states to a reservation candidate who wants to make a reservation and thus concentration of service use during a specific time period can be relieved. For example, when the service use fee in the service delivery time zone having a less number of reservations of the service use is set to be very low, this will prompt a new service reservation candidate to use the less-reservation-number date zone, thus enabling further avoidance of the concentration of the service requests during the specific time period.

When the service use reservation state reaches such a level that the service reservation management server is required to inform an administrator of the state, the service reservation management server informs an administrator terminal of the state. In response to the system notification, the service provider can quickly expand the server or change the method for computing the service use fee when the reservation of a service delivery time is concentrated or poor.

The service reservation management server, when the service use reservation state reaches such a state that it becomes necessary to change the method for computing the service use fee, can change a pattern of combination of the service use reservation state and service use fee. As a result, when the reservation of the service use on a service delivery time is concentrated or poor, the server can change the service use fee computation method without any troublesome intervention of the administrator to cope with it.

### BRIEF DESCRIPTION OF THE DRAWINGS

Fig. 1 shows a functional configuration of a first embodiment of the present invention;
Fig. 2 shows a functional configuration of a second embodiment of the present invention;
Fig. 3 is a flowchart showing a detailed procedure of operations in a step 201 in Fig. 2; and
Fig. 4 is a flowchart showing a detailed procedure of operations in a step 203 in Fig. 2.

### DESCRIPTION OF THE EMBODIMENTS

Embodiments of the present invention will be explained with reference to attached drawings.

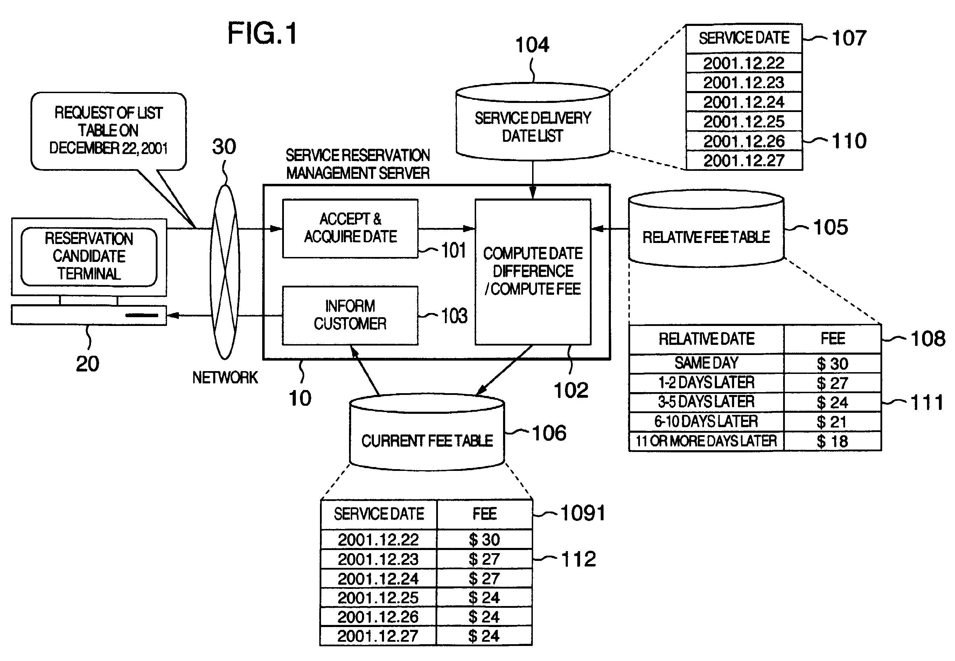

Explanation will first be made in detail as to a first embodiment of the present invention by referring to a functional configuration of Fig. 1. In the first embodiment, a service reservation management server 10 is connected to a terminal 20 used by a person (reservation candidate) who wants to reserve service use via a communication network 30.

At a step 101, the service reservation management server 10 accepts a reservation candidate's demand of a list of service delivery times and service use fees and records its accepted time. The server acquires its date from the system date of the service reservation management server.

At a step 102, the service reservation management server 10 computes a difference between the time acquired at the step 101 and a service date recorded in a service delivery time list 104, computes a service use fee by comparing it with associated one in a relative fee table 105, and records it in a current fee table 106.

An exemplary table 107 of the service delivery time list 104 indicates that an identical service is delivered from December 22, 2001 to December 27, 2001. An exemplary table 108 of the relative fee table 105 indicates that, assuming that a reservation candidate demanded a list of service dates and fees on December 22, 2001, then "the service fee is $24 when a difference between the demand date of the list of service dates and fees and the service delivery time is from 3 to 5 days" as listed on a row 111. An exemplary table 109 of the current fee table 106 means that, on a row 112, "the service use fee is $24 when reservation to use the service of December 25, 2001 is made on 22nd of a demand date".

At the step 102, since a difference from the service date of December 25, 2001 (row 110) is 3 days and this applies to the row 111 of the relative date condition, the fee on December 25, 2001 is determined to be $24. It is desirable that a fee during service delivery period of time follow a descending or a partially descending trend.

At the step 102, for each service delivery time recorded in the service delivery time list 104, the service reservation management server 10 can determine its service use fee and respond to reservation candidate's demand in such a manner as mentioned above.

At a step 103, the service reservation management server 10 informs reservation candidate's terminal via the communication network of a current fee table 106 as the list of service dates and service use fees created at the step 102.

In the present embodiment, a business promoter who offers services via the network can change use fees for the services according to a difference between the service delivery time and reservation date. This is effective in relieving its concentrated access of the demanded service during a particular time period, since the user can have a possibility of advancing the demand date or delaying the service date. For example, in the case of a service of downloading a new film file, when its fee is set to be lower as a difference from the service delivery start date is larger, a customer, who has less necessity of downloading it on or immediately after the service delivery time, can reserve its download service enough after the service start date, or making reservation well before the delivery date thus relieving download accesses thereto concentratedly on the start date.
This advantageously enables lightening of the load of a communication line and lowering of a predicted value of a use capacity of the communication line.

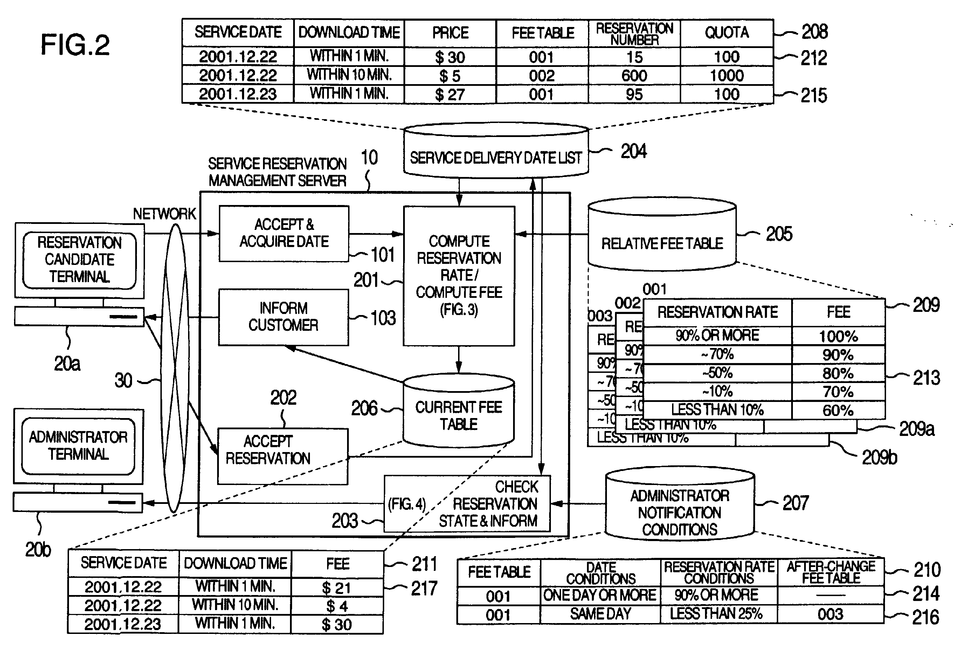

A second embodiment will be detailed by referring to a functional configuration of Fig. 2. In the second embodiment, explanation will be made only as to constituent parts of Fig. 2 different from those of Fig. 1.

In a functional configuration of a service reservation management server 10 in the second embodiment, the server 10 can timely compute reservation rates for service delivery times with use of a service delivery time list 204 at a step 201 and can change a service use fee system on the service delivery times by comparing it with a relative fee table 205.

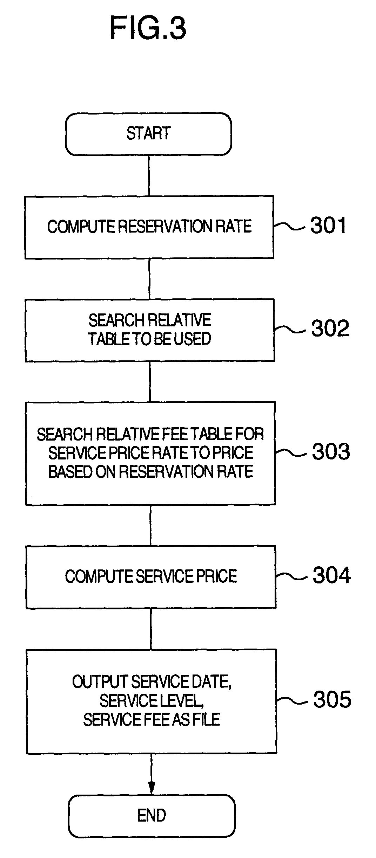

Details in the step 201 will be explained with reference to Fig. 3. At a step 301, the service reservation management server 10 collects reservations on the respective service delivery times and computes reservation rates with respect to allowable service quotas on the basis of the service delivery time list 204.

An exemplary table 208 of the service delivery time list 204 includes service dates, download times, service use fee prices, identifiers of relative fee tables used at the time of determining the service use fees from the reservation rates, the numbers of reservations, and upper reservation limits. The download time is expressed as one of factors showing a service level in the present embodiment. For example, when such a file as a film data file is downloaded, it is said in the illustrated table that the a file corresponding to a download time of 'within 1 minute' is higher in service level than a file corresponding to a download time of 'within 10 minutes'. Other service level factors may include a time required from issuance of download request to acquisition and a data-file staying period held in the data server for the downloaded data result. When such service level descriptions are included in the service delivery list, the administrator can also present these data at a customer notification step 103 simultaneously when presenting the service use fees to customers.

For service delivery data 212 in the list 208, for example, the service reservation management server 10 computes its reservation rate as 15% at a step 301, because the number of reservations (also sometimes referred to the reservation number, hereinafter) is '15' and the upper reservation limit is '100'.

At a step 302, the service reservation management server 10 searches a set 205 of relative fee tables for predetermined one of the tables within the list 204 to be used when determining the service use fee. An example of the relative fee tables are illustrated as a table 209. Relative fee tables 209, 209a and 209b each describe an range of reservation rate and a rate of service use fee to its price. For example, a row 213 in the relative fee table 209 means that "when the reservation rate is not smaller than 100% and not larger than 50%, the service use fee is set at 70% of its price".

In the case of the service delivery data 212 as an example, at a step 302, the service reservation management server 10 searches for the relative fee table 209, since the service delivery data 212 has a fee table ID of '001'.

At a step 303, the service reservation management server 10 searches for a rate of the service use fee to price (which will be also referred to as the service use fee/price rate, hereinafter) on the basis of the reservation rate computed at the step 301 and the relative fee table searched at the step 302. In the case of the service delivery data 212 as an example, the reservation rate is 15%, the relative fee table used is the relative fee table 209, and the service use fee rate is 70% from the row 213.

At a step 304, the service reservation management server 10 computes a service use fee from the service use fee/price rate and records it in a current fee table 206. An example of the current fee table 206 is given as a table 211.

In the case of the service delivery data 212 as an example, the price is $30 and the service use fee rate is 70%, so that, at a step 304, the service reservation management server 10 computes $21 as a service fee on the current date of December 22, 2001 and registers it as fee data 217.

Although the service reservation management server 10 has computed the service use fee with use of the reservation rate at the step 201, the server may easily compute the service use fee with use of a combination of the reservation rate and the difference date explained in the first embodiment.

At the step 202, the service reservation management server 10 accepts a reservation request from a reservation candidate. For example, when the service reservation management server 10 accepts a service use reservation on 'December 22, 2001', the server changes a reservation column in the service delivery data 212 from '15' to '16'.

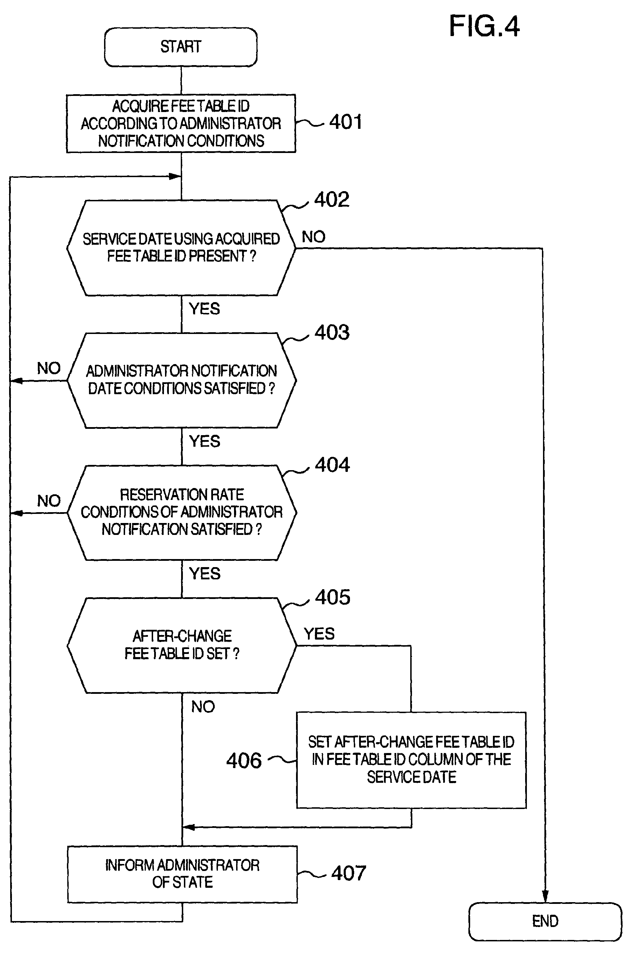

At a step 203, on the basis of administrator notification conditions 207, the service reservation management server 10 checks the service delivery time list 204. When finding a presence of a service delivery time satisfying the administrator notification conditions in the list, the service reservation management server 10 informs the administrator of the presence. Detailed of the step 203 are shown in Fig. 4. An example of the administrator notification conditions 207 is shown by a table 210 including columns of relative fee table ID, date conditions, reservation rate conditions, and relative fee table ID after change.

At the step 203, the service reservation management server 10 acquires a relative fee table ID from the administrator notification conditions 207 (step 401), and if finding a service delivery time using the acquired relative fee table ID (step 402), the server judges whether or not the found service delivery time satisfies the date and reservation rate conditions of the administrator notification conditions (steps 403 and 404). When determining the satisfied conditions and when the after-change fee table ID is listed in the administrator notification conditions (step 405), the service reservation management server 10 changes the fee table ID of the service delivery data to it (step 406) and informs the administrator of the satisfied administrator notification conditions and the changed contents (step 407).

For example, in the row 214 of the administrator notification conditions 207, the fee table ID is '001' and rows of the service delivery time list 204 using this fee table ID are rows 212 and 215. Assuming the delivery or execution date at the step 203 is 'December 22, 2001', then the service delivery data 212 fails to satisfy the date conditions but the service delivery data 215 satisfies both the date conditions and reservation rate conditions. Further, the fee table ID after the change is not listed in the administrator notification conditions 214. Therefore, the service reservation management server 10 informs the administrator of the fact alone that the service delivery time of 'December 23, 2001' satisfies the administrator notification conditions 214.

In administrator notification conditions 216, the fee table ID is '001' and rows of the service delivery data using the ID are rows 212 and 215. Assuming that the execution date of the step 203 is 'December 22, 2001', then the service delivery data 215 fails to satisfy the date conditions but the service delivery data 212 satisfies both the date conditions and reservation rate conditions. Further, the after-change fee table ID of '003' is listed in the administrator notification conditions 216. Accordingly the service reservation management server 10 changes the fee table ID of the service delivery data 212 from '001' to '003'. Further, the service delivery time of 'December 22, 2001' satisfies the administrator notification conditions 216 and thus the service reservation management server 10 informs the administrator of the fact that the relative use table was changed to '003'. A price reflecting a discount can be previously set in the fee table 003, for the purpose of increasing the reservation rate when the reservation number of '15' corresponds to the reservation rate conditions of 'less than 25%'.

At the step 203, the execution of the server is carried out at the timing when the system date was changed or at the timing when the server accepted a new reservation at the step 202.

Although the server is arranged to inform the administrator of the fact when both of the date conditions and reservation rate conditions are satisfied at the step 203, the server may inform the administrator of the fact even when only one of the both conditions is satisfied. Further, in addition to the date conditions and reservation rate conditions, the reservation number may be introduced if necessary.

In the present embodiment, since the business promoter for offering services via the network can change the service use fee according to the reservation rate of the service use, concentrated service requests to the service during a specific time period can be effectively relieved. For example, with regard to a download service of a new film file, when a fee therefor is set to be lower as its reservation rate is smaller, a customer, who has less necessity of downloading the file on a specific date such as its download start date, can reserve the use of the download service on a more inexpensively-set date and thus reservation dates can be evenly distributed. Further, when combined with the first embodiment, the present embodiment can change the service use fee on the basis of not only the reservation rate of the service use but also the difference between the service delivery time and reservation date, whereby the effect of even distribution of the reservations over dates can be further enhanced.

In the present embodiment, further, when the reservation situation of the service use reaches specific situation, the service reservation management server can inform the administrator of the service use reservation of the situation. Thus, when the situation reaches such situation that the administrator must take some countermeasure against it, the server can quickly inform the administrator of the fact, with the result that the administrator can quickly take such countermeasure as to expand the server machine, change how to compute the service use fee, etc.

In accordance with the present embodiment, when the reservation situation of the service use reaches specific situation, how to compute the service use fee can be mechanically changed. Therefore, when a measure to change how for the administrator to compute the service use fee is previously determined, the service reservation management server can automatically cope with the specific server use reservation situation without any troublesome manual intervention of the administrator.

In this connection, although the method for computing the service use fee in the present invention is implemented by a computer having a processor, a storage device and input and output devices; the present invention can be implemented by previously storing a program for implementation of the method of the invention in a readable storage medium and by loading the program stored in the storage medium into a main memory.

## Claims

1. A service management method for accepting a reservation of a service sold via a communication network to realize service sales management, comprising the steps of:
previously holding a plurality of fees (105, 205) for the service; and
determining fees (106, 206) for said service on the basis of a time (102) of a request of inquiry about the fee of said service received from a user via the network.

2. A service management method as set forth in claim 1, wherein said service is supplied via said network at a time equal to or later than said request time.

3. A service management method as set forth in claim 2, further comprising a step of a relative time from said request time to delivery time of said service, and a step of determining said fee on the basis of said relative time and said plurality of fees.

4. A service management method as set forth in claim 3, further comprising a step of informing the user of one of said plurality of fees selected based on a value of said relative time as a fee of said service.

5. A service management method as set forth in claim 1, further comprising a step of selecting one of said plurality of fees with use of a difference between said request time and the implementation time of said service.

6. A service management method as set forth in claim 5, further comprising a step of computing a reservation rate to a suppliable service number by accumulating reservations of said service accepted via said network, a step of preparing a plurality of previously determined relative fee tables (205) showing a relationship between the suppliable service number and a predetermined range of reservation rate for said service with a relative time as a base, and a step of, when accepting a reservation of said service via said network, selecting one of said plurality of relative fee tables (205) corresponding to said reservation rate after the reservation accumulation.

7. A service management method as set forth in claim 6, wherein a user who reserved said service accepts it as a fee determined by the value of said relative time on the basis of said selected fee table.

8. A program having a code which has a step of implementing the method set forth in claim 1 in the form of a code readable by a computer.

9. A service management system connected to a communication network for accepting a reservation of a service sold to realize service sales management, comprising:
a table for previously holding a plurality of fees (105, 205) for the service; and
a device, in response to a request of an inquiry about a fee of said service received from a user via the network, for determining the fee (106, 206) of said service on the basis of a time (102) of said request.

10. A service management system as set forth in claim 9, wherein said service is supplied via said network at a time equal to or later than said request time.

11. A service management system as set forth in claim 10, comprising a device for finding a relative time from said request time to said service implementation time, and a device for determining said fee on the basis of said relative time and said plurality of fees.
